# EUROPEAN PATENT SPECIFICATION

(11) **EP 2 237 475 B1**
(45) Date of publication and mention of the grant of the patent: **23.04.2014**
(21) Application number: 09761262.6
(22) Date of filing: 20.05.2009
(51) Int. Cl.: H04L 12/931

(54) **METHOD, SYSTEM AND SINGLE BOARD OF SUPPORTING HOT PLUG**
VERFAHREN, SYSTEM UND EINZELPLATINE MIT UNTERSTÜTZUNG EINES EINSTECKENS WÄHREND DES BETRIEBS (HOT PLUG)
PROCÉDÉ, SYSTÈME ET CARTE UNIQUE DESTINÉS À PRENDRE EN CHARGE UNE CONNEXION À CHAUD

(30) Priority: 10.06.2008 CN 200810114608
(43) Date of publication of application: 06.10.2010
(73) Proprietor: Huawei Technologies Co., Ltd., Longgang District, Shenzhen Guangdong 518129 (CN)
(72) Inventor: LI, Shanfu, Shenzhen 518129 (CN); ZHANG, Guangjun, Shenzhen 518129 (CN); HUANG, Yingdong, Shenzhen 518129 (CN); WANG, Geng, Shenzhen 518129 (CN)
(74) Representative: Körber, Martin Hans
(86) International application number: PCT/CN2009/071875
(87) International publication number: WO 2009/149637

(56) References cited:
- CN-A- 1 728 499
- CN-A- 1 797 280
- CN-A- 1 920 748
- CN-A- 1 929 691
- CN-A- 101 030 188
- CN-A- 101 090 333
- US-A1- 2003 033 546
- US-A1- 2004 230 866
- US-A1- 2007 230 148
- US-B1- 6 448 672
- "AdvancedTCA PICMG 3.0 Short Form Specification", SHORT FORM SPECIFICATION, PCI INDUSTRIAL COMPUTERS MANUFACTURERS GROUP (PCIMG), [Online] 1 January 2003 (2003-01-01), pages 1-33, XP002561594, Retrieved from the Internet: URL:http://www.picmg.org/pdf/PICMG_3_0_Sho rtform.pdf>

## Description

### FIELD OF THE TECHNOLOGY

The present invention relates to the field of communications technologies, and more particularly to a method, a system, and a board of supporting hot swap.

### BACKGROUND OF THE INVENTION

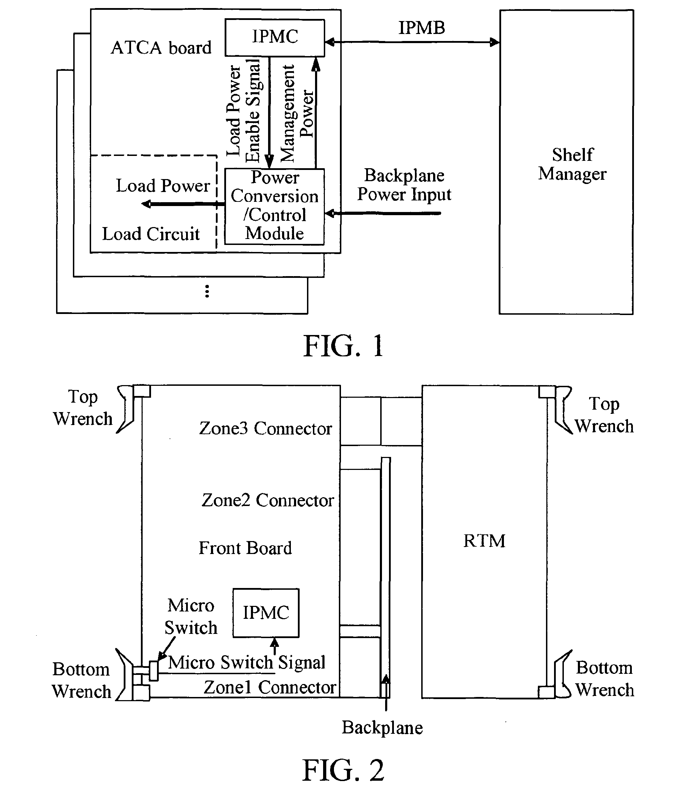

The advanced telecom computing architecture (ATCA) is a universal hardware platform technology for communications devices and computing servers. A principle for managing and controlling a power of a board according to an intelligent platform management interface (IPMI) specification in the ATCA is shown in FIG. 1. In the communications device, an intelligent platform management controller (IPMC) in an ATCA board is a management member, and communicates with a shelf manager through an intelligent platform management bus (IPMB). A power conversion/control module on the board is configured to receive a backplane power input and complete a conversion of a management power and a load power required by the board, in which the management power is output to management associated circuits, for example, the IPMC, and the load power is supplied to load circuits. After the ATCA board is plugged into the backplane, the power conversion/control module directly outputs the management power to the IPMC, so that the IPMC is powered on and starts to work normally. When certain conditions are satisfied (for example, handles of the board is closed), the IPMC communicates with the shelf manager. After getting permission from the shelf manager, the IPMC enables a load power enable signal of the power conversion/control module. After receiving the signal, the power conversion/control module outputs the load power to the load circuits.

The ATCA specification defines two types of boards, that is, a front board and a rear transition module (RTM). FIG. 2 is a structural view of the front board and the RTM. Referring to FIG. 2, the front board has three connectors, namely, a Zone1 connector, a Zone2 connector, and a Zone3 connector. The Zone1 connector provides a power and a management plane signal for the front board. The Zone2 connector provides a control plane signal, a data plane signal, and a clock signal for the front board. The Zone3 connector is provided for realizing user-customized connection. The front board is plugged into the ATCA shelf from the front of the shelf, and is connected to the backplane through the Zone1 connector and the Zone2 connector, including power connection and signal connection. The RTM is plugged into the ATCA shelf from the back of the shelf, and is connected to the corresponding front board through the Zone3 connector, including power connection and signal connection. Two handles, a top handle and a bottom handle, are respectively installed on the front board and the RTM and are configured to facilitate the plugging/unplugging of the boards. A handle switch is installed at the position of the bottom handle of the front board. The handle switch is in different switch states when the bottom handle is opened or closed. The IPMC on the front board may recognize whether the bottom handle is opened or closed by detecting a state of a handle switch signal connected to the handle switch.

In the prior art, the power of the RTM is supplied by the load power output by the power conversion/control module of the front board, and is supplied to RTM circuits through the Zone3 connector, in which the RTM circuits include an RTM management circuit and an RTM load circuit. The power supplied to the RTM by the front board through the Zone3 connector is the load power, and a current of the load power is usually quite high. Therefore, in order to avoid large current mutation during the plugging and unplugging procedures of the RTM and protect the RTM from being damaged, the supply of the power for the RTM needs to be cut off during the plugging and unplugging procedures of the RTM. One way is to open the handles of the front board before plugging the RTM or before unplugging the RTM, so that the front board is in a non-activated state. Accordingly, the power conversion/control module does not output the load power, so that the RTM is not supplied with power. In this case, the supply of the load power for the RTM is cut off, and meanwhile the supply of the load power for the front board is also cut off.

The prior art fails to support the hot swap of the RTM, the supply of the load power for the front board must be cut off during the plugging and unplugging procedures of the RTM, and as a result, the work of the front board is interrupted, thereby affecting the service of the front board.

US 2003/0033546 A1 discloses a server system, which comprises a plurality of slots for receiving kinds of cards. Each of the cards comprises a lever used for helping remove the cards out of the slots. In the Cards, a card 300E is configured for monitoring healthy of the server system, and also configured for monitoring the cards. The server system also comprises a plurality of hot swap status inputs, which could allow card 300E to determine the hot swap status of the cards.

US 2004/0230866 A 1 provides some resolve project for power management and data transition when a board is removed from slots of a server system.

### SUMMARY OF THE INVENTION

In order to realize hot swap of an RTM, the present invention is directed to a method, a system, and a board of supporting hot swap. Technical solutions are as follows.

In an embodiment, the present invention provides a method of supporting hot swap, which includes the following steps.

A front board detects a state of handles of an RTM connected to the front board. The front board controls whether to output a load power to the RTM according to a detection result.

The controlling whether to output the load power to the RTM according to the detection result further comprises: if it is detected that the handle of the RTM sends a power on request, determining a state of the front board, and activating the RTM if the front board is in an activated state, and outputting the load power to the RTM, and if it is detected that the handle of the RTM sends a power off request, stopping outputting the load power to the RTM.

In an embodiment, the present invention also provides a system of supporting hot swap, which includes a front board and an RTM connected to the front board. The front board is configured to detect a state of handles of the RTM, and control whether to output a load power to the RTM according to a detection result. The RTM is configured to receive the power from the front board.

The front board comprises an IPMC and an RTM power module connected to the IPMC, and the RTM power module is further connected to the RTM.

The IPMC is configured to detect the state of the handle of the RTM, determine a state of the front board when detecting that the handle of the RTM send a power on request, and send an RTM load power enable signal to the RTM power module if the state of the front board is an activated state, and send an RTM load power disable signal to the RTM power module when detecting that the handle of the RTM send a power off request.

The RTM power module is configured to output the load power to the RTM after receiving the RTM load power enable signal sent from the IPMC; and stop outputting the load power to the RTM after receiving the RTM load power disable signal sent from the IPMC.

In an embodiment, the present invention further provides a board of supporting hot swap, which includes a control module and an RTM power module connected to the control module, in which the RTM power module is further connected to an RTM. The control module is configured to detect a state of handles of the RTM, and send an RTM load power control signal to the RTM power module according to a detection result. The RTM power module is configured to output or stop outputting a load power to the RTM according to the received RTM load power control signal sent from the control module.

The control module comprises an intelligent platform management controller (IPMC), configured to detect the state of the handles of the RTM.

When detecting that the handles of the RTM send a power on request, determine a state of the board, and send an RTM load power enable signal to the RTM power module if the state of the board is an activated state, and when detecting that the handle of the RTM send a power off request, send an RTM load power disable signal to the RTM power module.

In the embodiments of the present invention, by determining the state of the handles of the RTM and controlling to output or stop outputting the load power to the RTM according to a determination result, the load power for the front board and the load power for the RTM are respectively managed, so as to realize the hot swap of the RTM. The service of the front board is not interrupted during plugging and unplugging procedures of the RTM, thereby improving the maintainability of the RTM.

### BRIEF DESCRIPTION OF THE DRAWINGS

To illustrate the technical solution according to the embodiments of the present invention or in the prior art more clearly, the accompanying drawings for describing the embodiments or the prior art are given briefly below. Apparently, the accompanying drawings in the following description are only some embodiments of the present invention.
FIG. 1 is a schematic view of a principle for managing and controlling a power of a board according to an IPMI specification in the prior art;
FIG. 2 is a schematic structural view of a front board and an RTM in the prior art;
FIG. 3 is a flow chart of a method of supporting hot swap according to an embodiment of the present invention;
FIG. 4 is a schematic view of a state conversion of a board according to an embodiment of the present invention;
FIG. 5 is a flow chart of a method of supporting hot swap according to a first embodiment of the present invention;
FIG. 6 is a schematic view of controlling a power of an RTM by a front board according to the first embodiment of the present invention;
FIG. 7 is another schematic view of controlling the power of the RTM by the front board according to the first embodiment of the present invention;
FIG. 8 is a schematic structural view of a system of supporting hot swap according to a second embodiment of the present invention;
FIG. 9 is another schematic structural view of the system of supporting hot swap according to the second embodiment of the present invention;
FIG. 10 is still another schematic structural view of the system of supporting hot swap according to the second embodiment of the present invention;
FIG. 11 is a schematic structural view of a front board according to a third embodiment of the present invention;
FIG. 12 is another schematic structural view of the front board according to the third embodiment of the present invention; and
FIG. 13 is still another schematic structural view of the front board according to the third embodiment of the present invention.

### DETAILED DESCRIPTION OF THE EMBODIMENTS

The following detailed description is directed to the technical solution of the present invention with reference to the accompanying drawings. However, the embodiments to be described are only part of, rather than all of, the embodiments of the present invention.

For better understanding of the objective, technical solution and merits of the present invention, the following describes the present invention in detail with reference to the accompanying drawings.

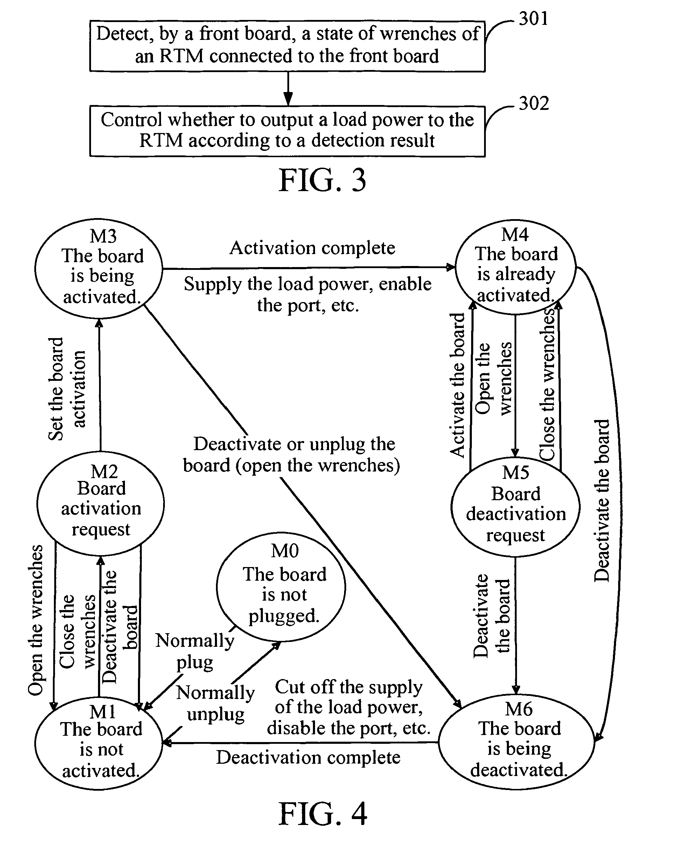

In an embodiment, the present invention provides a method of supporting hot swap. Referring to FIG. 3, the method particularly includes the following steps.

In step 301, a front board detects a state of handles of an RTM connected to the front board.

In step 302, the front board controls whether to output a load power to the RTM according to a detection result.

In this embodiment, a state of the RTM transits along with a state of the front board. The front board usually has the following types of states, that is, a non-plugged state M0, a non-activated state M1, an activation request receiving state M2, an activating state M3, an activated state M4, a deactivation request receiving state M5, and a deactivating state M6, and correspondingly, the RTM also has the above states. FIG. 4 is a schematic view of a state conversion of a board, in which the board refers to a front board. Referring to FIG. 4, the state M0 refers to a state that the front board is not completely plugged into a backplane of a shelf. The front board is in the state M1 when the front board is completely plugged into the backplane but the handles are not closed. In this case, a management power of the front board is output, and management associated circuits (for example, an IPMC) are normally powered on and start to work, but the load power is not output, and the front board is not activated. After the handles of the front board are closed, the front board enters the state M2. At this time, through a signal of the handle switch, the IPMC detects that the handles are closed, and starts to announce to a shelf manager that the front board is in position, and requests the shelf manager to activate the front board, and after getting permission, the front board enters the state M3. In the state M3, the IPMC starts to negotiate with the shelf manager about the power, and after getting permission from the shelf manager, the IPMC controls a power conversion/control module to output the load power, so that the other parts of the front board are normally powered on. After the front board is activated, the front board enters the state M4, that is, a normal operating state. When the handles of the front board are opened, the front board turns to the state M5, and then the front board starts to be deactivated, so that the front board enters the state M6, and in this case, the supply of the load power for the front board is cut off, a port is disabled, and so forth. When the front board is completely deactivated, the front board enters the state M1. When the front board is in the activating state M3, if the handles are opened, the front board directly transits from the state M3 to the state M6. Alternatively, when the front board is in the activated state M4, if the handles are opened, the front board directly transits from the state M4 to the state M6. Alternatively, when the front board is in the state M5, if the handles are closed and a board activation request is received, the front board directly transits to the state M4. Alternatively, when the front board is in the state M2, if the handles are opened and a board deactivation request is received, the front board directly transits to the state M1, and so forth.

### First Embodiment

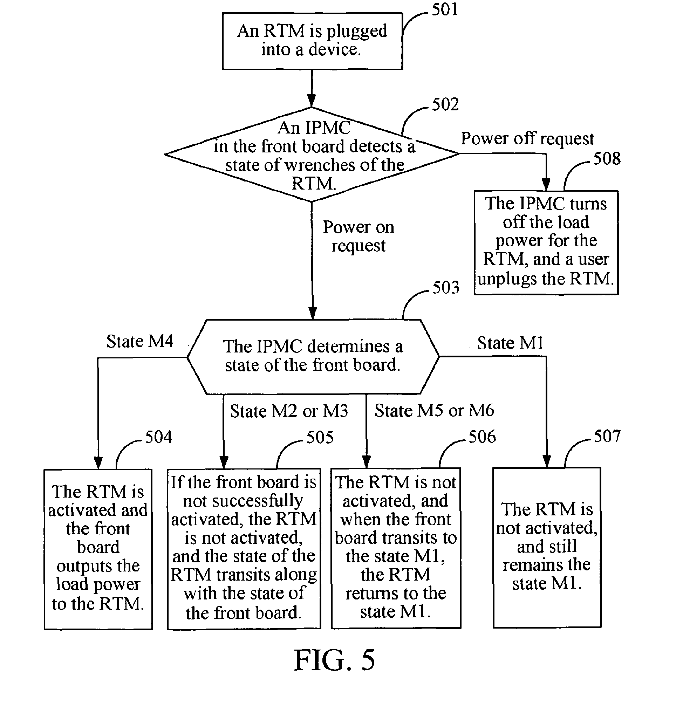

Referring to FIG. 5, in an embodiment, the present invention provides a method of supporting hot swap, which particularly includes the following steps.

In step 501, an RTM is plugged into a device, and the RTM is connected to a front board through a Zone3 connector. At this time, the RTM may be in a state of just being plugged into the device and being about to request to be powered on, or in a state of normally operating and being about to request to be powered off.

In step 502, an IPMC in the front board detects a state of handles of the RTM, and if the handles send a power on request, that is, the handles transit from an opened state to a closed state, the process proceeds to step 50; and if the handles send a power off request, that is, the handles transit from the closed state to the opened state, the process proceeds to step 508.

In this embodiment, a handle switch is installed on a bottom handle of the RTM, and the handle switch is connected to the IPMC of the front board through the Zone3 connector. Particularly, the IPMC determines the state of the handles of the RTM by detecting a signal of the handle switch.

In step 503, the IPMC determines a state of the front board. Particularly, the IPMC determines the state of the front board by reading the state information of the front board through communication with a shelf manager, in which if the state of the front board is an activated state M4, the process proceeds to step 504; if the state of the front board is an activation request receiving state M2 or an activating state M3, step 505 is executed; if the state of the front board is a deactivation request receiving state M5 or a deactivating state M6, the process proceeds to step 506; and if the state of the front board is an non-activated state M1, the process proceeds to step 507.

In step 504, the IPMC negotiates with the shelf manager about the power. The shelf manager activates the RTM, after confirming that the system can satisfy the demand of the load power of the RTM, and the front board outputs the load power to the RTM, that is, the RTM is powered on, so that the RTM is in the state M4, and a loading process of the load power for the RTM is finished.

In step 505, the handles of the RTM are closed, so that the RTM already transits from the state M1 to the state M2. The front board, however, is in a state of starting to be activated or in an activating state, so that the IPMC reports a state transition event M1->M2 of the RTM to the shelf manager. If the front board is not successfully activated, the front board directly transits to the deactivated state, that is, M3->M6, so that the RTM does not need to be activated. If the front board further returns to the state M1 and is automatically powered on one minute after being powered off, for example, an operating system is rebooted, the RTM performs state transition along with the state of the front board. If the front board is successfully activated, the RTM is correspondingly activated, and the loading process of the load power for the RTM is finished.

In step 506, the handles of the RTM are closed, that is, the RTM already transits from the state M1 to the state M2, but the handles of the front board are opened, that is, the front board starts to be deactivated or is being deactivated, so that the RTM does not need to be activated, and the IPMC reports the state transition event M1->M2 of the RTM to the shelf manager. When the front board transits from the state M5 or the state M6 to the state M1 to be completely deactivated, the RTM correspondingly returns to the state M1, and the loading process of the load power for the RTM is finished.

In step 507, the front board is just plugged and the handles are not closed yet, or the handles are just opened and the front board is about to be unplugged, so that the RTM does not need to be activated, and the RTM still maintains the state M1, so that the loading process of the load power for the RTM is finished.

In step 508, the IPMC turns off the load power for the RTM, and meanwhile reports a state transition event M6->M1 of the RTM to the shelf manager. The shelf manager restores power assigning resources, and waits for a user to unplug the RTM. During this procedure, the load power for the front board does not need to be turned off, the user unplugs the RTM, the RTM is in the state M0, and the loading process of the load power for the RTM is finished.

In this embodiment, the hot swap management on the front board and the hot swap management on the RTM are logically separately performed, and the IPMC controls to output or stop outputting the power to the RTM in various manners, which include, but not limited to, the following two types.

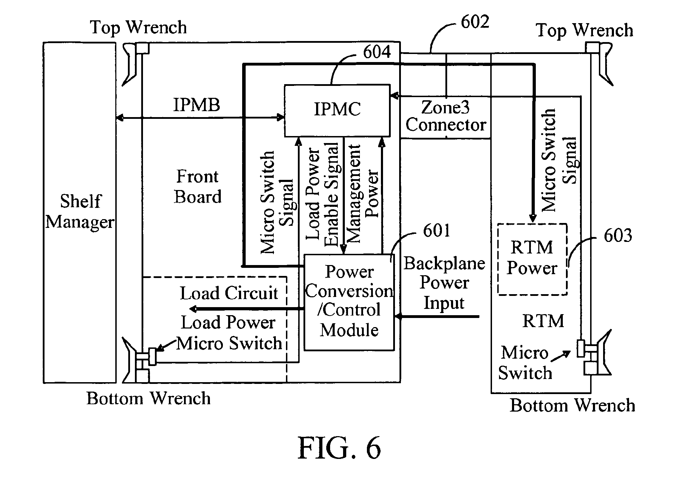

For one manner, referring to FIG. 6, a power conversion/control module 601 of the front board is connected to an RTM power 603 through a Zone3 connector 602, so as to provide an independent load power channel for the RTM, so that the load powers of the front board and the RTM are separately managed. An IPMC 604 provides two types of load power enable signals, that is, a front board load power enable signal and an RTM load power enable signal respectively. The power conversion/control module 601 provides the load power for the front board and the RTM according to the received different enable signals. Particularly, during implementation, two switches may be disposed in the power conversion/control module 601, in which a first switch is configured to control the load power for the RTM, and a second switch is configured to control the load power for the front board. When the IPMC 604 controls to output the load power to the RTM, the IPMC 604 sends the RTM load power enable signal to the first switch in the power conversion/control module 601, and the first switch in the power conversion/control module 601 outputs the load power to the RTM after receiving the signal. When the IPMC 604 controls to turn off the load power for the RTM, the IPMC 604 sends an RTM load power disable signal to the first switch in the power conversion/control module 601, and the first switch in the power conversion/control module 601 stops outputting the load power to the RTM after receiving the signal. In addition, when the IPMC 604 controls the load power for the front board, the IPMC 604 sends a control signal to the second switch in the power conversion/control module 601, so as to control whether to output the load power to the front board, thereby separating the supply of the load power for the front board and the RTM.

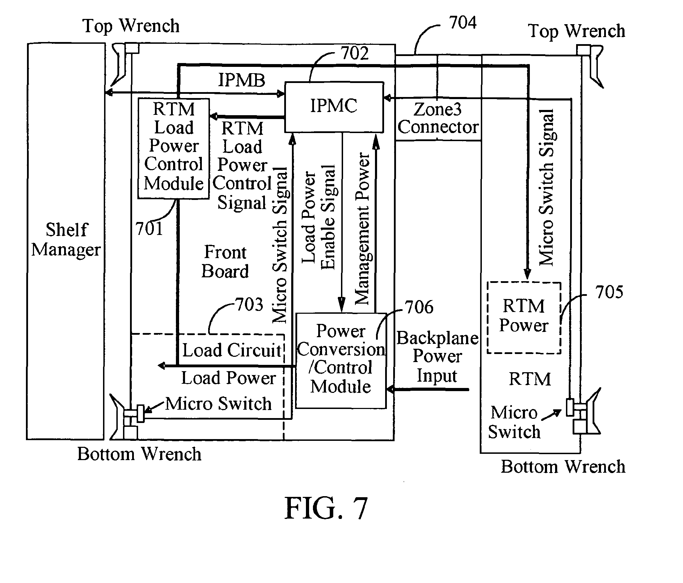

For the other manner, referring to FIG. 7, an RTM load power control module 701 is added on the front board, which may be realized as, for example, a switch. The RTM load power control module 701 is respectively connected to an IPMC 702 and a load circuit 703, and is connected to an RTM power 705 through a Zone3 connector 704. A part of the power separated from the load power of the load circuit 703 is output to the RTM load power control module 701. When the IPMC 702 controls to output the load power to the RTM, the IPMC 702 sends an RTM load power enable signal to the RTM load power control module 701, and the RTM load power control module 701 outputs the power separated from the load power of the load circuit 703 to the RTM after receiving the signal. When the IPMC 702 controls to turn off the load power for the RTM, the IPMC 702 sends an RTM load power disable signal to the RTM load power control module 701, and the RTM load power control module 701 stops outputting the power separated from the load power of the load circuit 703 to the RTM after receiving the signal. In addition, the IPMC 702 directly controls a power conversion/control module 706 to supply the power or cut off the power for the front board.

In the plugging and unplugging procedures of the front board and the RTM, the IPMC needs to communicate with the shelf manager. In this embodiment, an interaction between the IPMC and the shelf manager is realized by adopting two independent messages, in which one message is applicable to the plugging and unplugging of the front board, and the other message is applicable to the plugging and unplugging of the RTM. When different field replaceable units (FRUs) (for example, the front board and the RTM) under the management of the same IPMC interact with the shelf manager, the FRUs are logically distinguished by using FRU Device Identifiers (IDs). The IPMC assigns different IDs to different FRUs, for example, the IPMC assigns the FRU Device ID of 1 to the RTM, and assigns the FRU Device ID of 0 to the front board. During the power-on and power-off procedures of the RTM, the IPMC carries the FRU Device ID of the RTM in the message while communicating with the shelf manager. Furthermore, the method further includes the following steps. When the IPMC of the front board detects that the handles of the RTM send a power on request, the IPMC communicates with the shelf manager through a message, and performs a negotiation about the load power for the RTM, and if the negotiation is successful, the front board determines a self state, in which the message includes the FRU Device ID assigned, by the IPMC, to the RTM. When the IPMC communicates with the shelf manager to manage the front board, the FRU Device ID assigned, by the IPMC, to the front board is carried in the communications message. In this embodiment, although the front board and the RTM communicate with the shelf manger through the same IPMC physical entity, the FRU Device IDs carried in the communications messages are different, so that the front board and the RTM logically interact with the shelf manager according to their respective power-on and power-off processes, and respectively adopt independent messages during the interaction, thereby realizing the separate management on the front board and the RTM.

In this embodiment, it is controlled to output or stop outputting the load power to the RTM by determining the state of the handles of the RTM and considering the state of the front board, so that the load power for the RTM is separately managed, and the hot swap of the RTM is realized, without interrupting the service of the front board during the plugging and unplugging procedures of the RTM, thereby improving the maintainability of the RTM. By adding the handle switch on the handle of the RTM, the state of the handle of the RTM is determined, thereby simplifying a hardware architecture of the hot swap of the RTM, and reducing a cost and a complexity of the system. The front board controls the load power for the RTM in a manner of separately outputting the power or outputting the power separated from the load power, so that the application is quite flexible.

### Second Embodiment

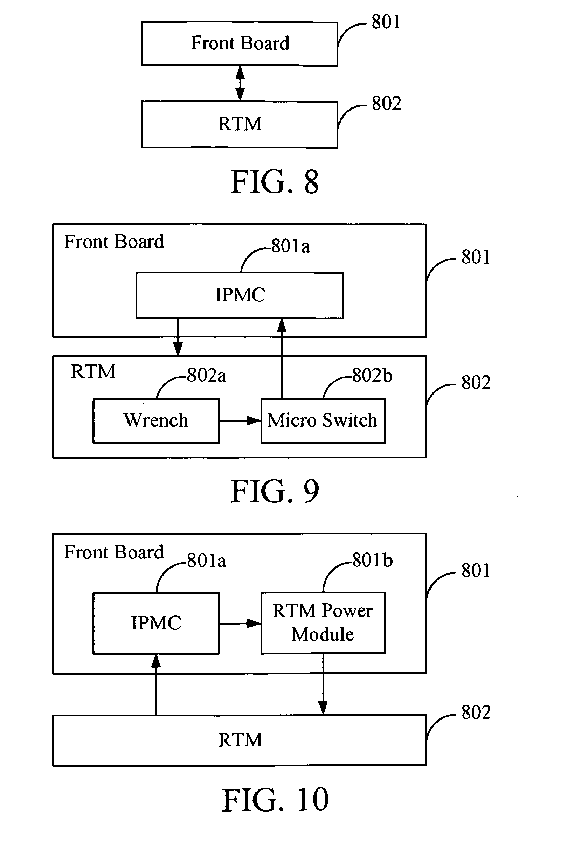

Referring to FIG. 8, in an embodiment, the present invention provides a system of supporting hot swap, which includes a front board 801 and an RTM 802 connected to the front board 801.

The front board 801 is configured to detect a state of handles of the RTM 802, and control whether to output a load power to the RTM 802 according to a detection result.

The RTM 802 is configured to receive the power from the front board 801.

Particularly, referring to FIG. 9, the RTM 802 includes a handle 802a, and the handle 802a has a handle switch 802b, in which the handle switch 802b is connected to an IPMC 801a of the front board 801. When the front board 801 detects the state of the handle of the RTM 802, particularly, the IPMC 801a determines the state of the handle of the RTM 802 by detecting a signal of the handle switch 802b, in which the handle switch 802b outputs different signals according to different states of the handle 802a, so as to indicate the state of the handle 802a. For example, when the handle 802a is closed, the handle switch 802b outputs a close signal to request to power on the RTM 802; when the handle 802a is opened, the handle switch 802b outputs an open signal to request to power off the RTM 802.

Furthermore, referring to FIG. 10, the front board 801 includes the IPMC 801a and an RTM power module 801b connected to the IPMC 801a, in which the RTM power module is further connected to the RTM 802.

The IPMC 801a is configured to detect the state of the handles of the RTM 802, determine a state of the front board 801 when detecting that the handles of the RTM 802 send a power on request, and send an RTM load power enable signal to the RTM power module 801b if the state of the front board is an activated state, and send an RTM load power disable signal to the RTM power module 801b when detecting that the handles of the RTM 802 send a power off request.

The RTM power module 801b is configured to output the load power to the RTM 802 after receiving the RTM load power enable signal sent from the IPMC 801a, and stop outputting the load power to the RTM 802 after receiving the RTM load power disable signal sent from the IPMC 801a.

In this embodiment, it is controlled to output or stop outputting the load power to the RTM by determining the state of the handles of the RTM and considering the state of the front board, so that the load power for the RTM is separately managed, and the hot swap of the RTM is realized, without interrupting the service of the front board during the plugging and unplugging procedures of the RTM, thereby improving the maintainability of the RTM. By adding the handle switch on the handle of the RTM, the state of the handle of the RTM is determined, thereby simplifying a hardware architecture of the hot swap of the RTM, and reducing a cost and a complexity of the system.

### Third Embodiment

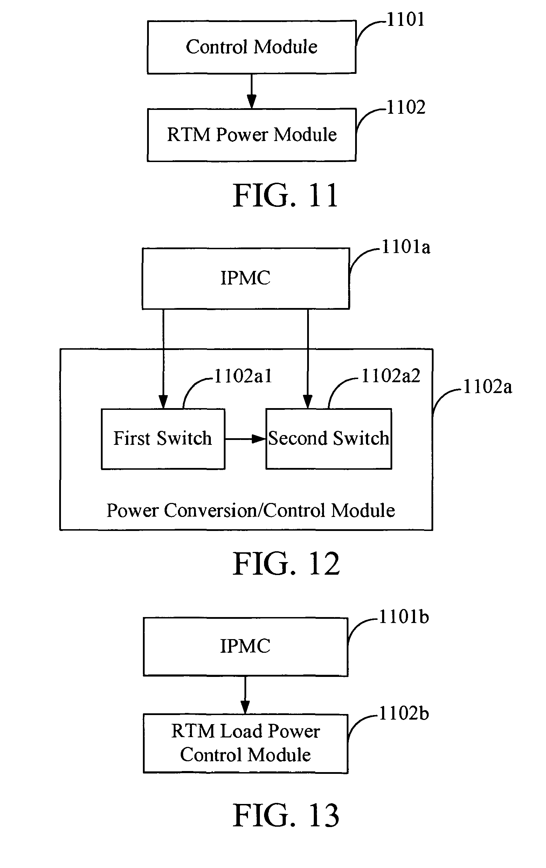

Referring to FIG. 11, in an embodiment, the present invention further provides a front board, which includes a control module 1101 and an RTM power module 1102 connected to the control module 1101, in which the RTM power module 1102 is further connected to an RTM.

The control module 1101 is configured to detect a state of handles of the RTM, and send an RTM load power control signal to the RTM power module 1102 according to a detection result.

The RTM power module 1102 is configured to output or stop outputting a load power to the RTM according to the received RTM load power control signal sent from the control module 1101.

The control module 1101 may be an IPMC.

The IPMC is configured to detect the state of the handles of the RTM, determine a state of the front board when detecting that the handles of the RTM send a power on request, and send an RTM load power enable signal to the RTM power module 1102 if the state of the front board is an activated state, and send an RTM load power disable signal to the RTM power module 1102 when detecting that the handles of the RTM send a power off request.

Correspondingly, the RTM power module 1102 is particularly configured to output the load power to the RTM after receiving the RTM load power enable signal sent from the IPMC; and stop outputting the load power to the RTM after receiving the RTM load power disable signal sent from the IPMC. Furthermore, the RTM power module 1102 may be implemented in the following two manners. In one manner, referring to FIG. 12, the control module 1101 is implemented as an IPMC 1101a, and correspondingly, the RTM power module 1102 is a power conversion/control module 1102a including a first switch 1102al and a second switch 1102a2.

The first switch 1102a1 is configured to output the load power to the RTM after receiving the RTM load power enable signal sent from the IPMC 1101 a, and stop outputting the load power to the RTM after receiving the RTM load power disable signal sent from the IPMC 1101a.

The second switch 1102a2 is configured to control whether to output the load power to a load circuit of the front board according to a front board load power control signal sent from the IPMC 1101a. Here, the other parts of the front board may be known with reference to FIG. 6, and the description thereof is not given here.

In the other manner, referring to FIG. 13, the control module 1101 is implemented as an IPMC 1101b, and correspondingly, the RTM power module 1102 is an RTM load power control module 1102b. The RTM load power control module 1102b is connected to a load circuit of the front board, and is configured to output a power separated from the load power of the load circuit to the RTM after receiving the RTM load power enable signal sent from the IPMC 1101b, and stop outputting the power separated from the load power of the load circuit to the RTM after receiving the RTM load power disable signal sent from the IPMC 1101b. Here, the other parts of the front board may be known with reference to FIG. 7, and the description thereof is not given here.

The front board in the third embodiment may be applied in the system of the second embodiment.

In this embodiment, it is controlled to output or stop outputting the load power to the RTM by determining the state of the handles of the RTM and considering the state of the front board, so that the load power for the RTM is separately managed, and the hot swap of the RTM is realized, without interrupting the service of the front board during the plugging and unplugging procedures of the RTM, thereby improving the maintainability of the RTM. The front board controls the load power for the RTM in a manner of separately outputting the power or outputting the power separated from the load power, so that the application is quite flexible.

Persons of ordinary skill in the art may understand that all or part of the steps of the method according to the embodiments of the present invention may be implemented by a program instructing relevant hardware. The program may be stored in a computer readable storage medium. When the program is run, one or a combination of the steps of the method according to the embodiments of the present invention are performed.

In addition, the functional units in each embodiment of the present invention may be integrated in one processing module, or two or more units are integrated in one processing module, or each unit exists independently. The integrated module may be embodied in the form of hardware or a software functional module. If the integrated module is embodied in the form of a software functional module and is sold or used as a separate product, the integrated module may be stored in a computer readable storage medium.

The storage medium may be a magnetic disk, a Compact Disk Read-Only Memory (CD-ROM), or a Read-Only Memory (ROM).

The above descriptions are merely some exemplary embodiments of the present invention, but not intended to limit the scope of the present invention.

## Claims

1. A method of supporting hot swap, **characterized by** comprising:
detecting, by a front board, a state of handle of a rear transition module (RTM) connected to the front board; and
controlling whether to output a load power to the RTM according to a detection result,
wherein the controlling whether to output the load power to the RTM according to the detection result further comprises:
if it is detected that the handle of the RTM sends a power on request, determining a state of the front board, and activating the RTM if the front board is in an activated state, and outputting the load power to the RTM; and
if it is detected that the handle of the RTM sends a power of request, stopping outputting the load power to the RTM.

2. The method of supporting hot swap according to claim 1, **characterized in that**, the detecting, by the front board, the state of the handle of the RTM connected to the front board further comprises:
detecting, by an intelligent platform management controller (IPMC) of the front board, a signal of a handle switch of the RTM to determine the state of the handle of the RTM, wherein the handle of the RTM is connected to the IPMC through the handle switch.

3. The method of supporting hot swap according to claim 1, **characterized in that**, the outputting the load power to the RTM further comprises:
sending, by an IPMC of the front board, an RTM load power enable signal to a power conversion/control module of the front board, and outputting, by the power conversion/control module, the load power to the RTM after receiving the RTM load power enable signal;
the stopping outputting the load power to the RTM further comprises:
sending, by the IPMC of the front board, an RTM load power disable signal to the power conversion/control module of the front board, and stopping outputting, by the power conversion/control module, the load power to the RTM after receiving the RTM load power disable signal.

4. The method of supporting hot swap according to claim 1, **characterized in that**, the outputting the load power to the RTM further comprises: sending, by an IPMC of the front board, an RTM load power enable signal to an RTM load power control module, and outputting, by the RTM load power control module, a power separated from a load power of the front board to the RTM, after receiving the RTM load power enable signal, wherein the RTM load power control module is located on the front board, connected to a load circuit of the front board, and connected to the RTM; and
the stopping outputting the load power to the RTM further comprises: sending, by the IPMC of the front board, an RTM load power disable signal to the RTM load power control module, and stopping outputting, by the RTM load power control module, the power separated from the load power of the front board to the RTM, after receiving the RTM load power disable signal.

5. The method of supporting hot swap according to claim 1, further **characterized by** comprising:
communicating, by an IPMC of the front board, with a shelf manager through a message after detecting that the handle of the RTM send the power on request, performing a negotiation about the load power for the RTM, and executing the determining, by the front board, the self state if the negotiation is successful, wherein the message comprises an identifier (ID) number assigned, by the IPMC, to the RTM.

6. A system of supporting hot swap, comprising a front board and a rear transition module (RTM) connected to the front board, **characterized in that**,
the front board is configured to detect a state of handle of the RTM, and control whether to output a load power to the RTM according to a detection result; and
the RTM is configured to receive the power from the front board,
wherein the front board comprises an IPMC and an RTM power module connected to the IPMC, and the RTM power module is further connected to the RTM;
the IPMC is configured to detect the state of the handle of the RTM, determine a state of the front board when detecting that the handle of the RTM send a power on request, and send an RTM load power enable signal to the RTM power module if the state of the front board is an activated state, and send an RTM load power disable signal to the RTM power module when detecting that the handle of the RTM send a power off request; and
the RTM power module is configured to output the load power to the RTM after receiving the RTM load power enable signal sent from the IPMC; and stop outputting the load power to the RTM after receiving the RTM load power disable signal sent from the IPMC.

7. The system of supporting hot swap according to claim 6, wherein the RTM comprises a handle having a handle switch, and the handle switch is connected to the front board by an intelligent platform management controller (IPMC), and is configured to send a signal indicating the state of the handle of the RTM to the IPMC.

8. A board supporting hot swap, comprising a control module (601) and a rear transition module (RTM) power module (801b) connected to the control module, **characterized in that**, the RTM power module is further connected to an RTM (802);
the control module is configured to detect a state of a handle (802a) of the RTM, and send an RTM load power control signal to the RTM power module according to a detection result; and
the RTM power module is configured to output or stop outputting a load power to the RTM according to the received RTM load power control signal sent from the control module,
wherein the control module comprises:
an intelligent platform management controller (IPMC), configured to detect the state of the handles of the RTM,
when detecting that the handles of the RTM send a power on request, determine a state of the board, and send an RTM load power enable signal to the RTM power module if the state of the board is an activated state, and
when detecting that the handle of the RTM send a power off request, send an RTM load power disable signal to the RTM power module.

9. The board according to claim 8, **characterized in that**, the RTM power module comprises a power conversion/control module (1102a) having a first switch (1102a1) and a second switch (1102a2);
the first switch is configured to output the load power to the RTM after receiving the RTM load power enable signal sent from the IPMC, and stop outputting the load power to the RTM after receiving the RTM load power disable signal sent from the IPMC; and
the second switch is configured to control whether to output the load power to the board according to a front board load power control signal sent from the IPMC.

10. The board according to claim 8, **characterized in that**, the RTM power module is an RTM load power control module, and the RTM load power control module is connected to a load circuit of the board, and is configured to output a power separated from a load power of the load circuit to the RTM after receiving the RTM load power enable signal sent from the IPMC, and stop outputting the power separated from the load power of the load circuit to the RTM after receiving the RTM load power disable signal sent from the IPMC.

## Patentansprüche

1. Verfahren zum Unterstützen eines Wechsels während des Betriebs, **dadurch gekennzeichnet, dass** es Folgendes umfasst:
Detektieren eines Griffzustands eines Rücktransitionsmoduls (RTM), das mit der Frontplatine verbunden ist, durch eine Frontplatine; und
Steuern, ob eine Laststromversorgung an das RTM auszugeben ist, gemäß einem Detektionsergebnis,
wobei das Steuern, ob die Laststromversorgung an das RTM auszugeben ist, gemäß dem Detektionsergebnis, ferner Folgendes umfasst:
wenn detektiert wird, dass der Griff des RTM eine Stromversorgung-An-Anforderung sendet, Bestimmen eines Zustands der Frontplatine und Aktivieren des RTM, wenn sich die Frontplatine in einem aktivierten Zustand befindet, und Ausgeben der Laststromversorgung an das RTM; und
wenn detektiert wird, dass der Griff des RTM eine Stromversorgung-Aus-Anforderung sendet, Stoppen des Ausgebens der Laststromversorgung an das RTM.

2. Verfahren zum Unterstützen eines Wechsels während des Betriebs nach Anspruch 1, **dadurch gekennzeichnet, dass** das Detektieren des Zustands des Griffs des RTM, das mit der Frontplatine verbunden ist, durch die Frontplatine, ferner Folgendes umfasst:
Detektieren eines Signals eines Griffschalters des RTM durch eine intelligente Plattformverwaltungssteuerung (IPMC) der Frontplatine, um den Zustand des Griffs des RTM zu bestimmen, wobei der Griff des RTM durch den Griffschalter mit der IPMC verbunden ist.

3. Verfahren zum Unterstützen eines Wechsels während des Betriebs nach Anspruch 1, **dadurch gekennzeichnet, dass** das Ausgeben der Laststromversorgung an das RTM ferner Folgendes umfasst:
Senden eines RTM-Laststromversorgungs-Freigabesignals durch eine IPMC der Frontplatine zu einem Stromversorgungsumwandlungs-/Steuermodul der Frontplatine und Ausgeben der Laststromversorgung an das RTM durch das Stromversorgungsumwandlungs-/Steuermodul nach dem Empfang des RTM-Laststromversorgungs-Freigabesignals;
wobei das Stoppen des Ausgebens der Laststromversorgung an das RTM ferner Folgendes umfasst:
Senden eines RTM-Laststromversorgungs-Sperrsignals durch die IPMC der Frontplatine zu dem Stromversorgungsumwandlungs-/Steuermodul der Frontplatine und Stoppen des Ausgebens der Laststromversorgung an das RTM durch das Stromversorgungsumwandlungs-/Steuermodul nach dem Empfang des RTM-Laststromversorgungs-Sperrsignals.

4. Verfahren zum Unterstützen eines Wechsels während des Betriebs nach Anspruch 1, **dadurch gekennzeichnet, dass**
das Ausgeben der Laststromversorgung an das RTM ferner Folgendes umfasst:
Senden eines RTM-Laststromversorgungs-Freigabesignals durch eine IPMC der Frontplatine zu einem RTM-Laststromversorgungs-Steuermodul und Ausgeben einer von einer Laststromversorgung der Frontplatine getrennten Stromversorgung durch das RTM-Laststromversorgungs-Steuermodul an das RTM nach dem Empfang des RTM-Laststromversorgungs-Freigabesignals, wobei sich das RTM-Laststromversorgungs-Steuermodul auf der Frontplatine befindet, mit einer Lastschaltung der Frontplatine verbunden und mit dem RTM verbunden ist; und
das Stoppen des Ausgebens der Laststromversorgung an das RTM ferner Folgendes umfasst: Senden eines RTM-Laststromversorgungs-Sperrsignals durch die IPMC der Frontplatine zu dem RTM-Laststromversorgungs-Steuermodul und Stoppen des Ausgebens der von der Laststromversorgung der Frontplatine getrennten Stromversorgung an das RTM durch das RTM-Laststromversorgungs-Steuermodul nach dem Empfang des RTM-Laststromversorgungs-Sperrsignals.

5. Verfahren zum Unterstützen eines Wechsels während des Betriebs nach Anspruch 1, ferner **dadurch gekennzeichnet, dass** es Folgendes umfasst:
Kommunizieren mit einem Baugruppenträger-Manager durch eine IPMC der Frontplatine mittels einer Nachricht, nachdem detektiert wird, dass der Griff des RTM die Stromversorgung-An-Anforderung sendet, Durchführen einer Aushandlung über die Laststromversorgung für das RTM und Ausführen des Bestimmens des Selbstzustands durch die Frontplatine, wenn die Aushandlung erfolgreich ist, wobei die Nachricht eine Kennungs-Nummer, ID-Nummer, umfasst, die durch die IPMC dem RTM zugewiesen wird.

6. System zum Unterstützen eines Wechsels während des Betriebs, das eine Frontplatine und ein Rücktransitionsmodul bzw. RTM, das mit der Frontplatine verbunden ist, umfasst, **dadurch gekennzeichnet, dass**
die Frontplatine ausgelegt ist zum Detektieren eines Griffzustands des RTM und steuern, ob eine Laststromversorgung an das RTM auszugeben ist, gemäß einem Detektionsergebnis; und
das RTM ausgelegt ist zum Empfangen der Stromversorgung von der Frontplatine,
wobei die Frontplatine eine IPMC und ein mit der IPMC verbundenes RTM-Stromversorgungsmodul umfasst und das RTM-Stromversorgungsmodul ferner mit dem RTM verbunden ist;
die IPMC ausgelegt ist zum Detektieren des Zustands des Griffs des RTM, Bestimmen eines Zustands der Frontplatine, wenn detektiert wird, dass der Griff des RTM eine Stromversorgung-An-Anforderung sendet, und Senden eines RTM-Laststromversorgungs-Freigabesignals zu dem RTM-Stromversorgungsmodul, wenn der Zustand der Frontplatine ein aktivierter Zustand ist, und Senden eines RTM-Laststromversorgungs-Sperrsignals zu dem RTM-Stromversorgungsmodul, wenn detektiert wird, dass der Griff des RTM eine Stromversorgung-Aus-Anforderung sendet; und
das RTM-Stromversorgungsmodul ausgelegt ist zum Ausgeben der Laststromversorgung an das RTM nach dem Empfang des von der IPMC gesendeten RTM-Laststromversorgungs-Freigabesignals; und Stoppen des Ausgebens der Laststromversorgung an das RTM nach dem Empfang des von der IPMC gesendeten RTM-Laststromversorgungs-Sperrsignals.

7. System zum Unterstützen eines Wechsels während des Betriebs nach Anspruch 6, wobei das RTM einen Griff mit einem Griffschalter umfasst und der Griffschalter durch eine intelligente Plattformverwaltungssteuerung (IPMC) mit der Frontplatine verbunden ist und ausgelegt ist zum Senden eines Signals, das den Zustand des Griffs des RTM anzeigt, zu der IMPC.

8. Wechsel während des Betriebs unterstützende Platine, die ein Steuermodul (601) und ein Rücktransitionsmodul-Stromversorgungsmodul, RTM-Stromversorgungsmodul (801b), das mit dem Steuermodul verbunden ist, umfasst, **dadurch gekennzeichnet, dass** das RTM-Stromversorgungsmodul ferner mit einem RTM (802) verbunden ist; das Steuermodul ausgelegt ist zum Detektieren eines Zustands eines Griffs (802a) des RTM und Senden eines RTM-Laststromversorgungs-Steuersignals zu dem RTM-Stromversorgungsmodul gemäß einem Detektionsergebnis; und
das RTM-Stromversorgungsmodul ausgelegt ist zum Ausgeben oder Stoppen des Ausgebens einer Laststromversorgung an das RTM gemäß dem von dem Steuermodul gesendeten empfangenen RTM-Laststromversorgungs-Steuersignal, wobei das Steuermodul Folgendes umfasst:
eine intelligente Plattformverwaltungssteuerung (IPMC), ausgelegt zum Detektieren des Zustands der Griffe des RTM,
wenn detektiert wird, dass die Griffe des RTM eine Stromversorgung-An-Anforderung senden, Bestimmen eines Zustands der Platine und Senden eines RTM-Laststromversorgungs-Freigabesignals zu dem RTM-Stromversorgungsmodul, wenn der Zustand der Platine ein aktivierter Zustand ist, und
wenn detektiert wird, dass der Griff des RTM eine Stromversorgung-Aus-Anforderung sendet, Senden eines RTM-Laststromversorgungs-Sperrsignals zu dem RTM-Stromversorgungsmodul.

9. Platine nach Anspruch 8, **dadurch gekennzeichnet, dass** das RTM-Stromversorgungsmodul ein Stromversorgungsumwandlungs-/Steuermodul (1102a) umfasst, das einen ersten Schalter (1102a1) und einen zweiten Schalter (1102a2) aufweist;
der erste Schalter ausgelegt ist zum Ausgeben der Laststromversorgung an das RTM nach dem Empfang des von der IPMC gesendeten RTM-Laststromversorgungs-Freigabesignals und Stoppen des Ausgebens der Laststromversorgung an das RTM nach dem Empfang des von der IPMC gesendeten RTM-Laststromversorgungs-Sperrsignals; und
der zweite Schalter ausgelegt ist zum Steuern, ob die Laststromversorgung an die Platine auszugeben ist, gemäß einem von der IPMC gesendeten Frontplatinen-Laststromversorgungs-Steuersignal.

10. Platine nach Anspruch 8, **dadurch gekennzeichnet, dass** das RTM-Stromversorgungsmodul ein RTM-Laststromversorgungs-Steuermodul ist und das RTM-Laststromversorgungs-Steuermodul mit einer Lastschaltung der Platine verbunden ist und ausgelegt ist zum Ausgeben einer von einer Laststromversorgung der Lastschaltung getrennten Stromversorgung an das RTM nach dem Empfang des von der IPMC gesendeten RTM-Laststromversorgungs-Freigabesignals und Stoppen des Ausgebens der von der Laststromversorgung der Lastschaltung getrennten Stromversorgung an das RTM nach dem Empfang des von der IPMC gesendeten RTM-Laststromversorgungs-Sperrsignals.

## Revendications

1. Procédé de prise en charge d'un échange à chaud, **caractérisé en ce qu'**il comprend :
la détection, par une carte avant, d'un état de la poignée d'un module de transition arrière (RTM, Rear Transition Module) connecté à la carte avant ; et
la commande du fait de savoir s'il faut fournir en sortie une alimentation de charge au RTM en fonction d'un résultat de détection,
dans lequel la commande du fait de savoir s'il faut fournir en sortie l'alimentation de charge au RTM en fonction du résultat de détection comprend en outre :
s'il est détecté que la poignée du RTM envoie une demande de mise sous tension, la détermination d'un état de la carte avant, et l'activation du RTM si la carte avant est dans un état activé, et la fourniture en sortie de l'alimentation de charge au RTM ; et
s'il est détecté que la poignée du RTM envoie une demande de mise hors tension, l'arrêt de la fourniture en sortie de l'alimentation de charge au RTM.

2. Procédé de prise en charge d'un échange à chaud selon la revendication 1, **caractérisé en ce que** la détection, par la carte avant, de l'état de la poignée du RTM connecté à la carte avant comprend en outre :
la détection, par une unité de commande de gestion de plate-forme intelligente (IPMC, Intelligent Platform Management Controller) de la carte avant, d'un signal d'un commutateur de poignée du RTM pour déterminer l'état de la poignée du RTM, dans lequel la poignée du RTM est connectée à l'IPMC par l'intermédiaire du commutateur de poignée.

3. Procédé de prise en charge d'un échange à chaud selon la revendication 1, **caractérisé en ce que** la fourniture en sortie de l'alimentation de charge au RTM comprend en outre :
l'envoi, par une IPMC de la carte avant, d'un signal de validation d'alimentation de charge de RTM à un module de conversion/commande d'alimentation de la carte avant, et la fourniture en sortie, par le module de conversion/commande d'alimentation, de l'alimentation de charge au RTM après réception du signal de validation d'alimentation de charge de RTM ;
l'arrêt de la fourniture en sortie de l'alimentation de charge au RTM comprend en outre :
l'envoi, par l'IPMC de la carte avant, d'un signal d'invalidation de l'alimentation de charge de RTM au module de conversion/commande d'alimentation de la carte avant, et l'arrêt de la fourniture en sortie, par le module de conversion/commande d'alimentation, de l'alimentation de charge au RTM après réception du signal d'invalidation de l'alimentation de charge de RTM.

4. Procédé de prise en charge d'un échange à chaud selon la revendication 1, **caractérisé en ce que**
la fourniture en sortie de l'alimentation de charge au RTM comprend en outre :
l'envoi, par une IPMC de la carte avant, d'un signal de validation d'alimentation de charge de RTM à un module de commande d'alimentation de charge de RTM, et la fourniture en sortie, par le module de commande d'alimentation de charge de RTM, d'une alimentation distincte de d'une alimentation de charge de la carte avant au RTM, après réception du signal de validation d'alimentation de charge de RTM, dans lequel le module de commande d'alimentation de charge de RTM est situé sur la carte avant, est connecté à un circuit de charge de la carte avant, et est connecté au RTM ; et
l'arrêt de la fourniture en sortie de l'alimentation de charge au RTM comprend en outre : l'envoi, par l'IPMC de la carte avant, d'un signal d'invalidation d'alimentation de charge de RTM au module de commande d'alimentation de charge de RTM, et l'arrêt de la fourniture en sortie, par le module de commande d'alimentation de charge de RTM, de l'alimentation distincte de l'alimentation de charge de la carte avant au RTM, après réception du signal d'invalidation d'alimentation de charge de RTM.

5. Procédé de prise en charge d'un échange à chaud selon la revendication 1, **caractérisé en outre en ce qu'**il comprend :
la communication, par une IPMC de la carte avant, avec un gestionnaire de plateau par l'intermédiaire d'un message après détection du fait que la poignée du RTM envoie l'alimentation sur demande, la réalisation d'une négociation concernant l'alimentation de charge destinée au RTM, et l'exécution de la détermination, par la carte avant, de son état propre si la négociation aboutit, dans lequel le message comprend un numéro d'identifiant (ID) affecté au RTM par l'IPMC.

6. Système de prise en charge d'un échange à chaud, comprenant une carte avant et un module de transition arrière (RTM) connecté à la carte avant, **caractérisé en ce que** la carte avant est configurée pour détecter un état de poignée du RTM, et pour commander le fait de savoir s'il faut fournir en sortie une alimentation de charge au RTM en fonction d'un résultat de détection ; et
le RTM est configuré pour recevoir l'alimentation de la carte avant,
dans lequel la carte avant comprend une IPMC et un module d'alimentation de RTM connecté à l'IPMC, et le module d'alimentation de RTM est en outre connecté au RTM;
l'IPMC est configurée pour détecter l'état de la poignée du RTM, déterminer un état de la carte avant lors de la détection du fait que la poignée du RTM envoie une alimentation sur demande, et envoyer un signal de validation d'alimentation de charge de RTM au module d'alimentation de RTM si l'état de la carte avant est un état activé, et envoyer un signal d'invalidation d'alimentation de charge de RTM au module d'alimentation de RTM lors de la détection du fait que la poignée du RTM envoie une demande de mise hors tension ; et
le module d'alimentation de RTM est configuré pour fournir en sortie l'alimentation de charge au RTM après réception du signal de validation d'alimentation de charge de RTM envoyé par l'IPMC ; et arrêter la fourniture en sortie de l'alimentation de charge au RTM après réception du signal d'invalidation d'alimentation de charge de RTM envoyé par l'IPMC.

7. Système de prise en charge d'un échange à chaud selon la revendication 6, dans lequel le RTM comprend une poignée ayant un commutateur de poignée, et le commutateur de poignée est connecté à la carte avant par une unité de commande de gestion de plate-forme intelligente (IPMC), et est configuré pour envoyer un signal indiquant l'état de la poignée du RTM à l'IPMC.

8. Carte prenant en charge un échange à chaud, comprenant un module de commande (601) et un module d'alimentation (801b) de module de transition arrière (RTM) connecté au module de commande, **caractérisée en ce que** le module d'alimentation de RTM est en outre connecté à un RTM (802) ;
le module de commande est configuré pour détecter un état d'une poignée (802a) du RTM et envoyer un signal de commande d'alimentation de charge de RTM au module d'alimentation de RTM conformément à un résultat de détection ; et
le module d'alimentation de RTM est configuré pour fournir en sortie ou arrêter de fournir en sortie une alimentation de charge au RTM conformément au signal de commande d'alimentation de charge de RTM reçu et ayant été envoyé par le module de commande ;
dans laquelle le module de commande comprend :
une unité de commande de gestion de plate-forme intelligente (IPMC), configurée pour détecter l'état des poignées du RTM,
lors de la détection du fait que les poignées du RTM envoient une demande de mise sous tension, déterminer un état de la carte, et envoyer un signal de validation d'alimentation de charge de RTM au module d'alimentation de RTM si l'état de la carte est un état activé, et
lors de la détection du fait que la poignée du RTM envoie une demande de mise hors tension, envoyer un signal d'invalidation d'alimentation de charge de RTM au module d'alimentation de RTM.

9. Carte selon la revendication 8, **caractérisée en ce que** le module d'alimentation de RTM comprend un module de conversion/commande d'alimentation (1102a) ayant un premier commutateur (1 102ail) et un second commutateur (1102a2) ;
le premier commutateur est configuré pour fournir en sortie l'alimentation de charge au RTM après réception du signal de validation d'alimentation de charge de RTM envoyé par l'IPMC, et arrêter de fournir en sortie l'alimentation de charge au RTM après réception du signal d'invalidation d'alimentation de charge de RTM envoyé par l'IPMC ; et
le second commutateur est configuré pour commander le fait de savoir s'il faut fournir en sortie l'alimentation de charge à la carte conformément à un signal de commande d'alimentation de charge de carte avant envoyé par l'IPMC.

10. Carte selon la revendication 8, **caractérisée en ce que** le module d'alimentation de RTM est un module de commande d'alimentation de charge de RTM, et le module de commande d'alimentation de charge de RTM est connecté à un circuit de charge de la carte, et est configuré pour fournir en sortie une alimentation distincte d'une alimentation de charge du circuit de charge au RTM après réception du signal de validation d'alimentation de charge de RTM envoyé par l'IPMC, et arrêter de fournir en sortie l'alimentation distincte de l'alimentation de charge du circuit de charge au RTM après réception du signal d'invalidation d'alimentation de charge de RTM envoyé par l'IPMC.
